# FASCICULE DE BREVET EUROPEEN

(11) **EP 2 706 137 B1**
(45) Date de publication et mention de la délivrance du brevet: **06.07.2016**
(21) Numéro de dépôt: 13182802.2
(22) Date de dépôt: 03.09.2013
(51) Int. Cl.: D04H 1/4242, D04H 3/002, D04H 3/02, D02J 1/18

(54) **Dispositif et procédé pour étaler un câble de fibres ou de fils de carbone**
Vorrichtung und Verfahren zum Aufspreizen eines Kabels aus Fasern oder Karbonfäden
Device and method for laying a fibre or carbon-wire cable

(30) Priorité: 10.09.2012 FR 1258429
(43) Date de publication de la demande: 12.03.2014
(73) Titulaire: Messier-Bugatti-Dowty, 78140 Vélizy-Villacoublay (FR)
(72) Inventeur: Dominguez, Laurent, 69360 TERNAY (FR)
(74) Mandataire: Boura, Olivier

(56) Documents cités:
- WO-A1-99/55943
- WO-A2-2005/002819
- FR-A1- 2 581 085
- FR-A1- 2 761 380
- FR-A1- 2 826 672
- US-A- 4 959 895
- US-A- 5 042 122

## Description

### Arrière-plan de l'invention

La présente invention se rapporte au domaine général de la réalisation de nappes fibreuses obtenues par étalement de plusieurs câbles de fibres ou de fils.

Un domaine d'application privilégiée mais non exclusif de l'invention est celui de la réalisation de préformes fibreuses tridimensionnelles destinées à la fabrication de pièces annulaires en matériau composite carbone-carbone (C-C), en particulier la fabrication de disques de frein.

Des disques de frein en matériau composite, en particulier en matériau composite à renfort en fibres de carbone et matrice carbone sont bien connus. Leur fabrication comprend la réalisation d'une préforme fibreuse annulaire et la densification de celle-ci par une matrice.

Un procédé connu pour la réalisation d'une préforme fibreuse annulaire consiste à réaliser des nappes fibreuses annulaires (à savoir une nappe dite transversale et une nappe dite circonférentielle) par étalement et juxtaposition de plusieurs câbles de fibres ou de fils de carbone. Les nappes transversale et circonférentielle sont alors liées entre elles par aiguilletage et entraînées en rotation. Une structure fibreuse annulaire épaisse est obtenue en liant plusieurs couches entre elles par aiguilletage circulaire.

Ce procédé, dont un exemple de mise en oeuvre est décrit dans le document WO 2007/048946, permet ainsi d'obtenir une préforme fibreuse annulaire pratiquement sans chute directement à partir de câbles de fibres ou de fils de carbone.

Avec un tel procédé, les câbles formant la nappe transversale sont plus précisément déposés alternativement dans un sens et dans l'autre entre des couronnes circulaires externe et interne coaxiales d'une installation. Inévitablement, un tel dépôt provoque un resserrement des fibres ou des fils de carbone en direction de la couronne interne (par rapport à la couronne externe).

Aussi, pour obtenir une nappe fibreuse annulaire parfaitement homogène sur toute sa largeur, il est nécessaire de compenser l'augmentation de la masse surfacique de la nappe transversale au niveau de la couronne interne due à ce resserrement par une diminution correspondante de la masse surfacique de la nappe circonférentielle à cet endroit.

Pour conférer à la nappe circonférentielle une masse surfacique décroissante entre la couronne externe et la couronne interne de l'installation, il est possible de former cette nappe avec des câbles ayant une même largeur mais présentant des titres décroissants entre les couronnes. Cependant, cette solution se révèle peu pratique de mise en oeuvre et nécessite de recourir à des câbles ayant des titres différents.

Une autre solution consiste à étaler davantage le ou les câbles en question avant leur dépose. Toutefois, les solutions d'étalement connues présentent un certain nombre d'inconvénients. En particulier, un dispositif d'étalement par soufflage d'air ne permet pas de figer la largeur du câble et d'éviter ainsi qu'il ne retrouve son aspect initial avant sa dépose entre les couronnes de l'installation. Il est également important que l'étalement du câble s'opère en conservant l'homogénéité des fibres au sein du câble. Enfin, l'étalement du câble doit pouvoir être obtenu sans créer de tension dans le câble.

WO 99/55943 décrit un dispositif selon le préambule de la revendication 1.

### Objet et résumé de l'invention

Il existe donc un besoin de pouvoir disposer d'un dispositif pour étaler un câble de fibres ou de fils de carbone qui réponde à l'ensemble de ces contraintes.

Conformément à l'invention, ce but est atteint grâce à un dispositif selon la revendication 1.

Avec un tel dispositif, en faisant défiler le câble de fibres ou de fils de carbone dans les dents du peigne (ou en le faisant affleurer les dents du peigne), il est possible d'obtenir un étalement des fibres ou fils de sorte à élargir le câble en sortie du dispositif. En effet, il a été constaté que les dents du peigne qui pénètrent dans le câble (ou qui l'affleurent) pour le peigner selon une direction sensiblement parallèle à la direction longitudinale des fibres ou fils qui constituent le câble permettent d'obtenir un étalement du câble dans le sens de sa largeur. De plus, il a été constaté qu'après peignage, le câble reste à sa largeur. Il n'est en particulier pas nécessaire de recourir à des fibres thermocollantes pour assurer un maintien de la largeur du câble. En outre, en faisant défiler le câble dans le même sens d'avance que le sens de rotation du disque du dispositif, il est possible de réaliser un élargissement du câble sans générer de tension dans celui-ci en sortie du dispositif. Enfin, ce dispositif est simple de mise en oeuvre, ne génère pas de nuisance sonore et peut aisément s'intégrer dans une installation pour la fabrication d'une nappe fibreuse annulaire.

De préférence, le dispositif comprend en outre des moyens de réglage de la position radiale du peigne sur le disque. Ainsi, le peigne peut être monté sur le disque dans une gorge radiale et être apte à pouvoir coulisser à l'intérieur de celle-ci de façon à permettre un réglage de la position radiale dudit peigne sur le disque.

L'invention a également pour objet un procédé pour étaler un câble de fibres ou de fils de carbone, consistant à faire au moins affleurer les dents du peigne du dispositif tel que défini précédemment dans le câble selon une direction sensiblement parallèle à la direction longitudinale des fibres ou fils dudit câble.

Le câble de fibres ou de fils de carbone peut avancer par rapport au dispositif selon une direction sensiblement tangentielle au disque.

De plus, le câble de fibres ou de fils de carbone peut avancer par rapport au dispositif dans le même sens que le sens de rotation dudit disque. Il est ainsi possible de ne pas générer de tension dans le câble.

Les dents des peignes du dispositif peuvent pénétrer dans le câble sans le traverser. De la sorte, il est aisé de conserver une homogénéité de fibres dans le câble après son passage dans les dents des peignes du dispositif.

L'invention a encore pour objet l'utilisation d'un tel procédé pour la réalisation d'une nappe fibreuse par étalement et juxtaposition de plusieurs câbles de fibres ou de fils de carbone.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective d'un dispositif pour étaler un câble de fibres ou de fils de carbone conforme à l'invention ;
- les figures 2 et 3 montrent de façon schématique le fonctionnement du dispositif de la figure 1.

### Description détaillée de l'invention

L'invention trouve une application privilégiée aux installations pour la fabrication d'une préforme fibreuse annulaire destinée à la réalisation de pièces annulaires en matériau composite carbone-carbone (C-C), en particulier la fabrication de disques de frein.

Une installation pour la fabrication d'une préforme fibreuse annulaire est décrite dans la demande de brevet WO 2007/048946 dont le contenu est intégré par référence et ne sera donc pas détaillée ici.

En substance, une telle installation comprend un dispositif d'amenée d'une première nappe fibreuse et de dépôt de celle-ci sur un support annulaire alternativement dans un sens et dans l'autre entre des couronnes circulaires coaxiales externe et interne situées de part et d'autre du support annulaire pour former une première nappe annulaire, ou nappe transversale.

Une telle installation comprend également un dispositif d'amenée d'une deuxième nappe fibreuse sur le support annulaire et de dépôt de celle-ci en direction circonférentielle entre les couronnes externe et interne pour former une deuxième nappe annulaire, ou nappe circonférentielle. Un dispositif permet d'entraîner en rotation les nappes transversale et circonférentielle autour de l'axe des couronnes.

Avec ce type d'installation, il est nécessaire de conférer à la nappe circonférentielle une masse surfacique décroissante entre la couronne externe et la couronne interne pour compenser la masse surfacique croissante de la nappe transversale et obtenir ainsi un ensemble ayant une masse surfacique sensiblement uniforme sur toute sa largeur.

Le dispositif conforme à la présente invention permet d'assurer une telle fonction en réalisant un étalement (ou élargissement) d'un ou plusieurs câbles de fibres ou de fils utilisés (ici des câbles de carbone) pour la réalisation de la nappe circonférentielle.

Bien entendu, le dispositif d'étalement selon la présente invention s'applique de manière plus générale à toute installation dans laquelle on cherche à obtenir un élargissement d'un câble de fibres ou de fils, cet élargissement devant demeurer figé après le passage du câble par le dispositif.

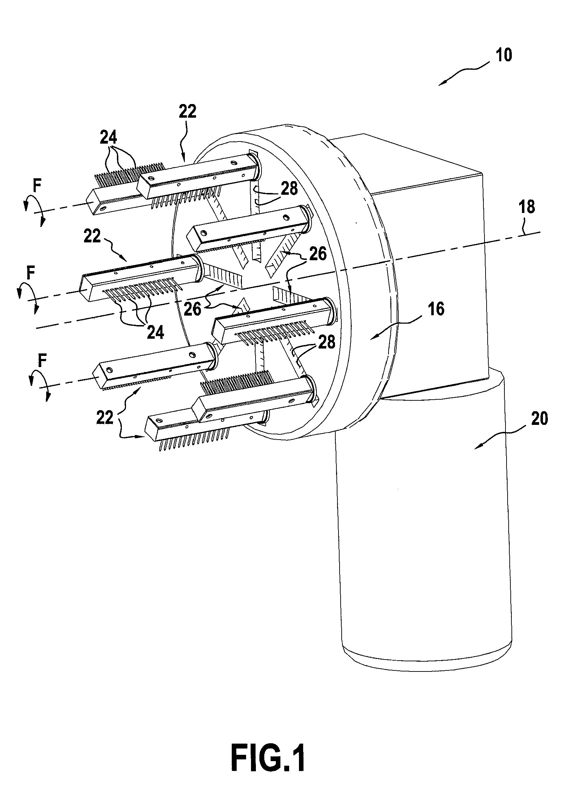

Le dispositif d'étalement 10 représenté sur les figures 1 à 3 peut ainsi s'adapter à une installation pour la fabrication d'une préforme fibreuse annulaire telle que celle décrite dans la demande de brevet WO 2007/048946. En particulier, ce dispositif d'étalement peut être monté juste en amont du dispositif d'amenée de la deuxième nappe fibreuse sur le support annulaire de l'installation.

Dans ce type d'installation, les câbles de fibres ou de fils de carbone destinés à former la nappe circonférentielle de la préforme fibreuse annulaire passent généralement au travers de plaques à oeillets 12. A la sortie de ces oeillets, chaque câble 100 passe sur une barre de guidage 14 avant d'être acheminé vers le dispositif d'étalement 10 conforme à l'invention.

Les câbles 100 de fibres ou de fils de carbone utilisés peuvent être formés de 50 000 filaments (50 K) ou 24 000 filaments (24 K) ayant des masses respectives de 3,85 kTex et 1,6 kTex.

Le dispositif d'étalement 10 selon l'invention comprend un disque 16 qui est monté sur un support (non représenté) de façon rotative par rapport à son axe de révolution 18. La rotation du disque autour de son axe de révolution est assurée par un moteur électrique 20 également monté sur le support du dispositif d'étalement (ou par tout autre moyen).

Le disque 16 est muni d'au moins un peigne 22 (au nombre de 8 dans l'exemple illustré sur les figures 1 à 3) qui est destiné à peigner un ou plusieurs câbles de fibres ou de fils de carbone selon une direction sensiblement parallèle à la direction longitudinale des fibres ou fils du câble. A cet effet, les barres 14 sont positionnées par rapport au disque 16 de sorte à assurer un guidage d'un ou plusieurs câbles à étaler vers le disque selon une direction sensiblement tangentielle à celui-ci.

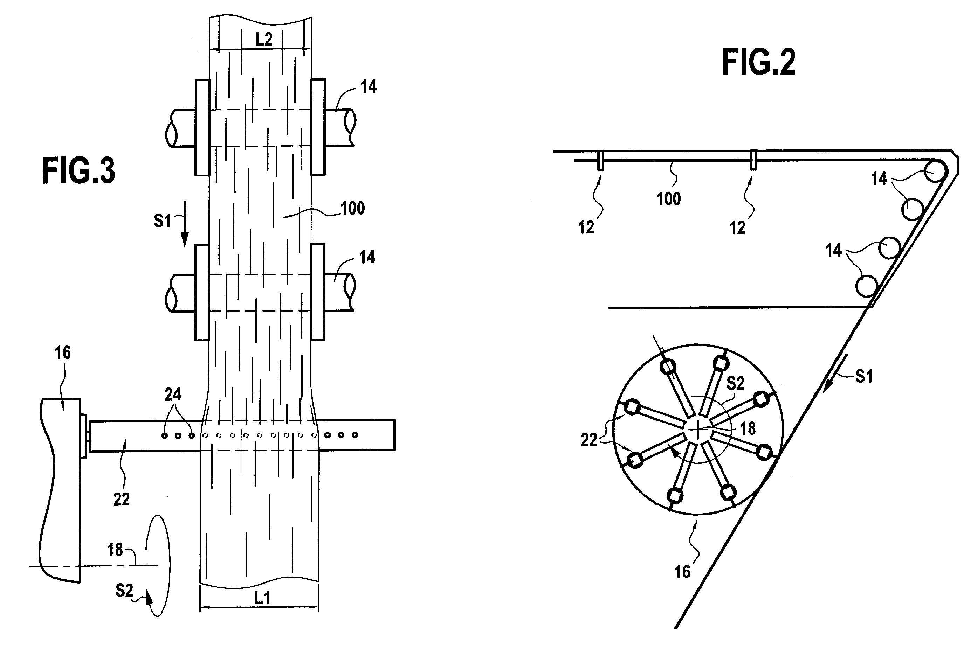

Pour assurer un tel peignage, chaque peigne 22 comprend une pluralité de dents 24 (figure 3) faisant saillie radialement vers l'extérieur du disque. Grâce au guidage du ou des câbles à étaler par les barres 14 du dispositif d'étalement, au moins certaines des dents 24 des peignes viennent pénétrer au moins en partie dans le ou les câbles correspondant pour les étaler comme cela sera décrit ultérieurement en liaison avec les figures 2 et 3.

Il est à noter que les peignes 22 montés sur le disque du dispositif n'ont pas nécessairement les mêmes caractéristiques. Par exemple, il est possible d'avoir des peignes dont la géométrie et la nature des dents (longueur, diamètre, profil, géométrie de leur pointe, matière, etc.) diffèrent. Ces caractéristiques sont autant de paramètres qui influent sur le degré d'élargissement du câble.

Selon une disposition avantageuse représentée plus précisément sur la figure 1, chaque peigne 22 est monté dans une gorge radiale 26 pratiquée dans le disque 16 et est apte à pouvoir coulisser à l'intérieur de celle-ci de façon à permettre un réglage de la position radiale dudit peigne sur le disque. Des crans 28 formés dans les gorges radiales 26 assurent un maintien en position des peignes. Il est ainsi possible de régler la position des peignes en fonction des câbles utilisés.

Chaque peigne 22 est monté sur le disque 16 par l'intermédiaire d'une liaison pivotante (non représentée sur les figures) de façon à permettre un réglage de l'orientation des dents dudit peigne (flèches F sur la figure 1). Il est ainsi possible de régler l'angle entre le câble à peigner et les dents du peigne.

Les figures 2 et 3 représentent schématiquement un exemple de mise en oeuvre d'un tel dispositif d'étalement.

Un câble 100 de fibres ou de fils de carbone alimente le dispositif d'étalement en cheminant par les plaques à oeillets 12 de celui-ci. Le câble 100 arrive au niveau des barres 14 qui assurent son guidage vers le disque 16 du dispositif d'étalement. Plus précisément, comme représenté sur la figure 2, le câble 100 est guidé pour défiler tangentiellement par rapport au disque 16.

Le disque 16 du dispositif d'étalement est mis en rotation autour de son axe de révolution 18 de sorte qu'au moins l'un de ses peignes 22 vienne peigner le câble selon une direction sensiblement parallèle à la direction longitudinale des fibres ou fils qui composent ledit câble. Pendant ce mouvement, les dents 24 des peignes qui viennent peigner le câble au cours de la rotation du disque pénètrent au moins en partie dans les fibres ou fils du câble.

Il a été constaté qu'un simple peignage (traversant ou non traversant) des fibres ou fils du câble permet d'obtenir un étalement de celui-ci (la largeur L1 du câble 100 en sortie du dispositif d'étalement est supérieure à sa largeur L2 en entrée - figure 3). Par ailleurs, cet étalement est obtenu tout en conservant l'homogénéité des fibres dans le sens de la largeur du câble après le passage de celui-ci dans les dents du peigne.

En particulier, la maîtrise de la largeur finale du câble pourra être assurée de la manière suivante. Lorsqu'une configuration optimum aura été définie (notamment en termes de nombre de peignes, de nombre et de géométrie des dents des peignes, de la position radiale des peignes, de l'angle entre les dents du peigne et le câble, etc.), la largeur finale du câble pourra être régulée en ajustant simplement la vitesse de rotation du disque. De plus, concernant le recouvrement du peignage, à une certaine vitesse de rotation du disque, le câble sera peigné plusieurs fois au même endroit, ce qui permettra d'obtenir un élargissement final plus important.

Un essai d'élargissement d'un câble a été réalisé en prenant un câble de fibres ou de fils de carbone formé de 50 000 filaments et ayant une largeur initiale de 20 à 25mm environ. Le dispositif utilisé lors de cet essai comprenait 6 peignes chacun ayant une largeur de 60mm et étant muni de dents à extrémité pointue (avec un écart entre deux dents adjacentes de l'ordre de 2mm). Les peignes étaient montés sur un disque ayant un diamètre de 200mm et animé d'une vitesse de rotation de 140 tours/min dans le même sens d'avance que le câble.

Cet essai a permis d'obtenir en sortie de dispositif une largeur de câble de l'ordre de 50mm, à comparer à la largeur initiale de 20 à 25mm. Il est ainsi aisé de doubler la largeur d'un câble.

Il a également été constaté que l'étalement du câble demeurait figé après son passage dans les dents du peigne, c'est-à-dire qu'il ne reprenait pas sa largeur initiale après avoir été peigné.

Différents paramètres influent sur l'étalement du câble qui passe dans les dents du peigne. Ainsi, si l'on souhaite que le peignage ne génère pas de tension dans le câble, il est nécessaire que le sens d'avance S1 du câble soit identique au sens de rotation S2 du disque 16 du dispositif d'étalement. A l'inverse, si l'on souhaite générer une tension dans le câble, il est préférable que ces sens d'avance soient contraires.

De même, le nombre de peignes qui pénètrent dans le câble, la longueur de leur course dans le câble, le nombre de cycles de peignages, etc. sont autant de paramètres qui ont une influence directe sur l'étalement du câble.

## Revendications

1. Dispositif (10) pour étaler un câble de fibres ou de fils de carbone, comprenant :
un disque (16) monté sur un axe rotatif et muni d'au moins un peigne (22) destiné à peigner un câble (100) de fibres ou de fils de carbone selon une direction sensiblement parallèle à la direction longitudinale des fibres ou fils du câble, ledit peigne comportant une pluralité de dents (24) faisant saillie vers l'extérieur du disque ; et
des moyens (20) d'entraînement en rotation du disque autour de son axe rotatif ;
**caractérisé en ce que** le peigne (22) est monté sur le disque (16) par l'intermédiaire d'une liaison pivotante de façon à pouvoir régler un angle entre le câble (100) à peigner et les dents (24) du peigne.

2. Dispositif selon la revendication 1, comprenant en outre des moyens de réglage de la position radiale du peigne sur le disque.

3. Dispositif selon la revendication 2, dans lequel le peigne (22) est monté sur le disque (16) dans une gorge radiale (26) et est apte à pouvoir coulisser à l'intérieur de celle-ci de façon à permettre un réglage de la position radiale dudit peigne sur le disque.

4. Procédé pour étaler un câble (100) de fibres ou de fils de carbone, consistant à faire au moins affleurer les dents du peigne du dispositif (10) selon l'une quelconque des revendications 1 à 3 dans le câble selon une direction sensiblement parallèle à la direction longitudinale des fibres ou fils dudit câble, les dents (24) du peigne (22) du dispositif pénétrant dans le câble sans le traverser.

5. Procédé selon la revendication 4, dans lequel le câble (100) de fibres ou de fils de carbone avance par rapport au dispositif selon une direction sensiblement tangentielle au disque.

6. Procédé selon l'une des revendications 4 et 5, dans lequel le câble (100) de fibres ou de fils de carbone avance par rapport au dispositif dans le même sens que le sens de rotation du disque.

7. Utilisation du procédé selon l'une quelconque des revendications 4 à 6 pour la réalisation d'une nappe fibreuse par étalement et juxtaposition de plusieurs câbles (100) de fibres ou de fils de carbone.

## Patentansprüche

1. Vorrichtung (10) zum Ausbreiten eines Seils aus Kohlenstofffasern oder -fäden, umfassend:
eine Scheibe (16), die an einer Drehachse angebracht und mit wenigstens einem Kamm (22) ausgestattet ist, der dazu bestimmt ist, ein Seil (100) aus Kohlenstofffasern oder -fäden in einer zu der Längsrichtung der Fasern oder Fäden des Seils im Wesentlichen parallelen Richtung zu kämmen, wobei der Kamm eine Vielzahl von Zähnen (24), die zur Außenseite der Scheibe vorspringen, umfasst, und
Mittel (20) zum Drehantreiben der Scheibe um ihre Drehachse,
**dadurch gekennzeichnet, dass** der Kamm (22) an der Scheibe (16) mittels einer Drehverbindung angebracht ist, so dass ein Winkel zwischen dem zu kämmenden Seil (100) und den Zähnen (24) des Kamms eingestellt werden kann.

2. Vorrichtung nach Anspruch 1, ferner umfassend Mittel zum Einstellen der radialen Position des Kamms an der Scheibe.

3. Vorrichtung nach Anspruch 2, bei der der Kamm (22) an der Scheibe (16) in einer radialen Nut (26) angebracht ist und geeignet ist, in dieser gleiten zu können, um eine Einstellung der radialen Position des Kamms an der Scheibe zu ermöglichen.

4. Verfahren zum Ausbreiten eines Seils (100) aus Kohlenstofffasern oder -fäden, das darin besteht, die Zähne des Kamms der Vorrichtung (10) nach einem der Ansprüche 1 bis 3 in dem Seil in einer zu der Längsrichtung der Fasern oder Fäden des Seils im Wesentlichen parallelen Richtung wenigstens bündig abschließen zu lassen, wobei die Zähne (24) des Kamms (22) der Vorrichtung in das Seil eindringen, ohne es zu durchdringen.

5. Verfahren nach Anspruch 4, bei dem das Seil (100) aus Kohlenstofffasern oder -fäden gegenüber der Vorrichtung in einer zu der Scheibe im Wesentlichen tangentialen Richtung fortschreitet.

6. Verfahren nach einem der Ansprüche 4 und 5, bei dem das Seil (100) aus Kohlenstofffasern oder -fäden gegenüber der Vorrichtung in der gleichen Richtung wie die Rotationsrichtung der Scheibe fortschreitet.

7. Verwendung des Verfahrens nach einem der Ansprüche 4 bis 6, für die Ausbildung einer Faserlage durch Ausbreiten und Nebeneinanderlegen von mehreren Seilen (100) aus Kohlenstofffasern oder -fäden.

## Claims

1. A device (10) for spreading a cable of carbon fibers or carbon yarns, comprising:
a disk (16) mounted on a rotary shaft and provided with at least one comb (22) adapted to comb a cable of carbon fibers or carbon yarns (100) in a direction substantially parallel to the longitudinal direction of the fibers or yarns of the cable, said comb including a plurality of teeth (24) protruding toward the outside of the disk; and
means (20) for rotating the disk around its rotary axis, **characterized in that** the comb (22) is mounted on the disk (16) by means of a pivoting link so as to make it possible to adjust an angle between the cable (10) to be combed and the teeth (24) of the comb.

2. The device according to claim 1, further comprising means for adjusting the radial position of the comb on the disk.

3. The device according to claim 2, wherein the comb (22) is mounted on the disk (16) in a radial groove (26) and is capable of sliding inside the latter so as to allow adjustment of the radial position of said comb on the disk.

4. A method for spreading a cable of carbon fibers or carbon yarns (100), consisting of at least making the teeth of the comb of the device (10) according to any one of claims 1 to 3 flush with the cable in a direction substantially parallel to the longitudinal direction of the fibers or yarns of said cable, the teeth (24) of the comb (22) of the device penetrating the cable without passing through it.

5. The method according to claim 4, wherein the cable of carbon fibers or carbon yarns (100) moves relative to the device in a direction substantially tangential to the disk.

6. The method according to one of claims 4 and 5, wherein the cable of carbon fibers or carbon yarns (100) moves relative to the device in the same direction as the direction of rotation of said disk.

7. Use of the method according to any one of claims 4 to 6 to produce a fibrous sheet by spreading and juxtaposing several cables of carbon fibers or carbon yarns (100).
